# FASCICULE DE BREVET EUROPEEN

(11) **EP 4 263 196 B1**
(45) Date de publication et mention de la délivrance du brevet: **28.05.2025**
(21) Numéro de dépôt: 21810660.7
(22) Date de dépôt: 21.10.2021
(51) Int. Cl.: B29D 30/08, B29D 30/16, B29D 30/60

(54) **PROCÉDÉ DE PILOTAGE D'UNE TÊTE DE POSE DE COMPOSANT DE BANDAGE AVEC SIMPLIFICATION DE TRAJECTOIRE**
VERFAHREN ZUR STEUERUNG EINES VERLEGEKOPFS EINER REIFENKOMPONENTE MIT VEREINFACHTEM WEG
METHOD FOR CONTROLLING A LAYING HEAD OF A TYRE COMPONENT WITH SIMPLIFIED PATH

(30) Priorité: 18.12.2020 FR 2013656
(43) Date de publication de la demande: 25.10.2023
(73) Titulaire: Compagnie Générale des Etablissements Michelin, 63000 Clermont-Ferrand (FR)
(72) Inventeur: BARD, Fabien, 63040 Clermont-Ferrand Cedex 9 (FR); HERBOMEL, Laurent, 63040 Clermont-Ferrand Cedex 9 (FR)
(74) Mandataire: M.F.P. Michelin
(86) Numéro de dépôt international: PCT/FR2021/051852
(87) Numéro de publication internationale: WO 2022/129708

(56) Documents cités:
- EP-A1- 1 533 107
- WO-A1-2019/235932

## Description

La présente invention concerne le domaine de la fabrication de bandages pour roues de véhicules, et plus particulièrement le domaine du pilotage des têtes de pose destinées à poser un composant de bandage par enroulement sur un support de fabrication rotatif de type noyau ou tambour.

Il est connu de fabriquer un bandage, notamment un bandage pneumatique, en enroulant en spires hélicoïdales sur un noyau présentant un profil galbé, de forme toroïdale, une pluralité de composants de bandage, tels qu'une ou plusieurs bandes continues de caoutchouc cru, c'est-à-dire de caoutchouc non vulcanisé, par exemple une bande de caoutchouc cru destinée à former la bande de roulement du bandage, ou encore une ou des bandes de renfort contenant des fils de renfort continus orientés parallèlement à la direction longitudinale de la bande de renfort, afin de former une ou des ceintures de renfort.

Il est à ce titre connu notamment par les documents EP 1 533 107 et WO 2019/235932 d'utiliser un bras robotisé qui porte une tête de pose conçue pour acheminer et poser le composant de bandage considéré sur le noyau. Bien entendu, il est alors nécessaire de piloter ledit bras robotisé afin de positionner, orienter et déplacer convenablement la tête de pose le long du profil du noyau, selon une trajectoire de pose adéquate.

A ce titre, il est parfois difficile de trouver un bon compromis entre d'une part la précision de pose, qui nécessite de multiplier les points servant à définir la trajectoire de pose, et d'autre part les capacités de stockage et de traitement informatique de l'unité de commande qui pilote le bras robotisé, qui ne permettent pas toujours de gérer en temps réel une grande quantité de données.

Certes, on connaît par ailleurs des algorithmes de lissage qui permettent, notamment au moyen de courbes de Bézier, de remplacer une succession de points de profil par une courbe de trajectoire modélisée par une fonction paramétrique polynomiale, qui permet une approximation simplifiée du profil. De telles courbes de Bézier ont pour principal avantage de présenter une continuité de leur courbure, et donc une courbe de trajectoire lisse.

Ceci étant, de tels algorithmes de lissage nécessitent une puissance de calcul relativement élevée, et ne sont de toute manière pas adaptés à la gestion de certaines catégories de bras robotisés, notamment de certaines catégories de bras robotisés anthropomorphes à six axes, dans la mesure où lesdits bras robotisés sont incapables de traiter une consigne de type courbe de Bézier, et ne peuvent fonctionner qu'avec un asservissement dit « par segments », c'est-à-dire dont la consigne est exprimée sous forme d'une table de trajectoire qui liste dans l'ordre la totalité des points successifs, en nombre fini, qui sont constitutifs de la trajectoire à suivre.

Les objets assignés à l'invention visent par conséquent à remédier aux inconvénients susmentionnés et à proposer un nouveau procédé de définition d'une trajectoire d'une tête de pose destinée à poser des composants de bandage sur un noyau, procédé qui permette un asservissement par segments et en temps réel d'une tête de pose disposant de capacités de traitement informatique modestes, et ce tout en garantissant malgré tout une précision et une qualité satisfaisantes de l'opération de pose.

Les objets assignés à l'invention sont atteints au moyen d'un procédé de définition d'une trajectoire d'une tête de pose, et d'un procédé correspondant de pilotage d'une tête de pose, ladite tête de pose étant destinée à poser au moins un composant de bandage par enroulement dudit composant de bandage en spires sur une face réceptrice d'un noyau entraîné en rotation autour de son axe central, ladite face réceptrice présentant, le long dudit axe central, un profil prédéterminé, ledit procédé comprenant :
- une étape (a) de caractérisation géométrique du profil, au cours de laquelle on fournit le tracé du profil de la face réceptrice et l'on isole sur ce profil un premier jeu de points remarquables, dit « points remarquables géométriques », qui sont jugés caractéristiques de la forme dudit profil, et l'on stocke lesdits points remarquables géométriques sous forme d'un jeu de points de trajectoire dit « table de trajectoire »,
- une étape (b) de caractérisation fonctionnelle du profil, au cours de laquelle on détermine sur le profil une pluralité de zones fonctionnelles qui s'étendent chacune depuis un point de départ de zone jusqu'à un point de fin de zone, et l'on associe à chacune desdites zones fonctionnelles une loi de pose qui spécifie des conditions de pose du composant de bandage dans la zone fonctionnelle considérée, et l'on insère lesdits points de départ de zone et lesdits points de fin de zone, formant un second jeu de point remarquables dits « points remarquables fonctionnels », dans la table de trajectoire,

- puis une étape (c) de maillage au cours de laquelle, en considération d'un sens de parcours prédéterminé du profil, on définit sur le profil, depuis le premier point remarquable fonctionnel, c'est-à-dire depuis le point de début de la première zone fonctionnelle, pris pour origine, jusqu'au dernier point remarquable fonctionnel, c'est-à-dire jusqu'au point de fin de la dernière zone fonctionnelle, une série de points virtuels équidistants, dits « points de guidage potentiels », qui délimitent deux à deux des segments de droite présentant tous une longueur identique, égale à une valeur choisie prédéterminée, dite « pas de résolution unitaire », et l'on insère lesdits points de guidage potentiels dans la table de trajectoire,
- puis une étape (d) de simplification au cours de laquelle on réduit la taille de la table de trajectoire en appliquant à la table de trajectoire un ou plusieurs critères de sélection afin de sélectionner au moins une partie, et seulement une partie, des points de guidage potentiels et des points remarquables géométriques et fonctionnels contenus dans la table de trajectoire, et en éliminant les points non sélectionnés, de sorte à obtenir une table de trajectoire simplifiée, de taille réduite, au sein de laquelle au moins un et de préférence plusieurs des segments qui relient deux à deux les points sélectionnés successifs présentent une longueur strictement supérieure au pas de résolution unitaire choisi.

Avantageusement, le procédé selon l'invention permet de bien identifier, et donc de bien prendre en considération, les points remarquables qui requièrent une attention particulière, que ce soit pour définir la géométrie du profil, notamment dans les portions du profil où ledit profil présente une certaine singularité géométrique telle qu'une courbure prononcée, ou pour signaler des singularités fonctionnelles, en l'espèce des changements dans la loi de pose, par exemple lorsque l'on modifie le pas ou la vitesse d'enroulement du composant de bandage.

En outre, le maillage initialement proposé par le procédé, grâce aux multiples points de guidage potentiels, offre la possibilité de disposer d'un maillage particulièrement fin chaque fois que cela est nécessaire.

Ainsi, selon la situation dans la portion de profil concernée, on pourra localement :
- soit conserver et exploiter la finesse du maillage, en conservant une densité élevée de points sélectionnés afin de garder une résolution fine, mettant en œuvre des segments courts dont la longueur vaut le pas de résolution unitaire, et donc afin d'assurer une bonne précision de pose dans la portion de profil concernée ; ceci sera typiquement applicable dans les portions du profil où se présente une singularité géométrique ou fonctionnelle, et plus particulièrement, de façon concrète, au voisinage des points remarquables ;
- soit au contraire « relâcher », c'est-à-dire dé-densifier, le maillage en ne sélectionnant et retenant qu'une partie des points de guidage potentiels parmi l'ensemble des points de guidage potentiels disponibles dans la portion de profil concernée, et donc en allongeant dans cette portion de profil les segments qui séparent deux points de trajectoire consécutifs ; ceci sera typiquement applicable dans les portions du profil qui présentent une moindre variabilité, notamment peu ou pas de changements de direction du tracé du profil et une certaine constance de la loi de pose.

A titre indicatif, on pourra augmenter la densité de points sélectionnés et ainsi définir des segments plus courts dans les portions du profil qui correspondent à des changements de loi de pose et dans les portions du profil qui présentent des changements de direction marqués, en virage serré, et donc un faible rayon de courbure, tel que cela est notamment le cas au niveau des épaules du bandage, c'est-à-dire dans les zones de transition entre le sommet du bandage qui forme la bande de roulement et les flancs du bandage qui relient ledit sommet à la jante. On pourra également, au contraire, espacer les points sélectionnés et donc allonger les segments notamment dans le sommet, quasi-plat, du bandage, qui correspond à la bande de roulement.

En définitive, grâce à l'invention, on pourra donc élaborer, puis transmettre au bras robotisé, une table de trajectoire qui sera particulièrement légère, car contenant relativement peu de points finalement sélectionnés, mais dont lesdits points sélectionnés seront distribués de sorte à se concentrer afin de resserrer leur maillage dans les portions les plus complexes et les plus délicates à réaliser du profil, pour garantir la grande précision requise dans ces portions, et au contraire à être davantage espacés afin de réduire la densité du maillage dans les portions plus simples, qui tolèrent une moindre précision dans le contrôle de la trajectoire.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue de dessus, une installation de fabrication de bandages apte à mettre en œuvre un procédé selon l'invention.
La figure 2 illustre un exemple de profil de face réceptrice du noyau, correspondant à la coupe de ladite face réceptrice dans un plan méridien du noyau contenant l'axe central dudit noyau, et sur lequel on a identifié une pluralité de points remarquables géométriques.
La figure 3 illustre une vue schématique d'un profil sur lequel on a identifié les points remarquables géométriques et les points remarquables fonctionnels.
La figure 4 illustre, selon une vue schématique, l'étape de maillage au cours de laquelle on crible le profil de la figure 3 au moyen d'une série de points de guidage potentiels équidistants.
La figure 5 illustre l'application d'un premier critère de sélection au cours duquel on sélectionne, sur le profil de la figure 4, les points de guidage potentiels qui encadrent les points remarquables.
La figure 6 illustre, selon une vue schématique, le principe d'un second critère de sélection, par limite de déviation autorisée, selon lequel on fait en sorte que, pour chaque trio de points sélectionnés, les deux segments de droite adjacents qui relient deux à deux les points sélectionnés consécutifs ne dévient pas du cercle interpolateur correspondant au-delà d'une valeur de déviation admissible prédéterminée.
La figure 7 illustre l'application du second critère de sélection par limite de déviation autorisée, et l'ajout des points sélectionnés correspondants, sur le profil de la figure 5.
La figure 8 illustre l'application au profil de la figure 7 d'un troisième critère de sélection, par longueur de segment maximale autorisée, selon lequel on ajoute à la sélection des points de guidage potentiels intermédiaires lorsque l'on détecte un segment, reliant deux points sélectionnés, dont la longueur dépasse une valeur de longueur maximale admissible.
La figure 9 illustre l'application au profil de la figure 8 d'un quatrième critère de sélection, par degré de qualité, au cours duquel on ajoute à la sélection de points de la figure 8 les points de guidage potentiels qui sont immédiatement voisins des points déjà sélectionnés.
La figure 10 illustre la trajectoire qui correspond à la table de trajectoire simplifiée finalement obtenue à l'issue de l'application des critères de sélection ci-dessus au profil de la figure 3.

La présente invention concerne un procédé de définition d'une trajectoire d'une tête de pose 1.

Ladite tête de pose 1 est destinée à poser au moins un composant de bandage 2 par enroulement dudit composant de bandage 2 en spires, de préférence en spires qui sont jointives ou partiellement chevauchantes d'un tour à l'autre, sur une face réceptrice 4A d'un noyau 4 qui est quant à lui entraîné en rotation autour de son axe central X4.

Le composant de bandage 2 peut être une bande continue de caoutchouc cru, ou bien encore un élément de renfort filaire continu, qui présente une longueur très supérieure, et notamment au moins 100 fois voire 1000 fois supérieure, à sa plus grande dimension transverse. Ledit élément de renfort filaire continu peut être formé par exemple d'un fil ou d'un câble de renfort en matériau métallique, en fibre de verre, ou en polymère choisi pour sa résistance à la traction, tel que de l'aramide, ledit fil ou câble étant éventuellement enrobé de caoutchouc cru. En variante, ledit élément de renfort filaire continu peut être formé par une bande de renfort comprenant plusieurs fils ou câbles de renfort continus, en métal, fibre de verre, ou polymère tel que l'aramide, qui sont agencés parallèlement les uns aux autres selon la direction longitudinale de la bande et noyés dans une matrice, par exemple en caoutchouc cru ou en résine éventuellement enrobée elle-même d'une surcouche de caoutchouc cru.

La tête de pose 1 est portée par un bras robotisé 5 monté mobile sur une embase 6.

Ledit bras robotisé 5 est de préférence un bras robotisé anthropomorphe à six axes. De façon connue en soi, un tel bras robotisé 5 comporte une première articulation dite « épaule » formant une liaison comprenant au moins deux axes de pivot orthogonaux entre l'embase 6 et un premier segment dit « bras » qui à son tour porte une seconde articulation dite « coude » comprenant de préférence au moins un axe de pivot pour assurer le débattement angulaire en flexion par rapport au bras d'un second segment dit « avant-bras », dont l'extrémité terminale porte une troisième articulation dite « poignet » qui est mobile selon trois axes de pivot orthogonaux deux à deux, dont l'un confondu avec l'axe longitudinal de l'avant-bras, ledit poignet étant conçu pour recevoir et porter la tête de pose 1.

Le bras robotisé 5, et donc la trajectoire de la tête de pose 1, est piloté par une unité de commande automatique appropriée, du genre automate programmable.

Le noyau 4 est porté par un bâti 7 dit « bâti de noyau » 7 et entraîné en rotation autour de son axe central X4 par rapport audit bâti de noyau 7 par un dispositif d'entraînement motorisé approprié, de préférence pourvu à cet effet d'un moteur électrique.

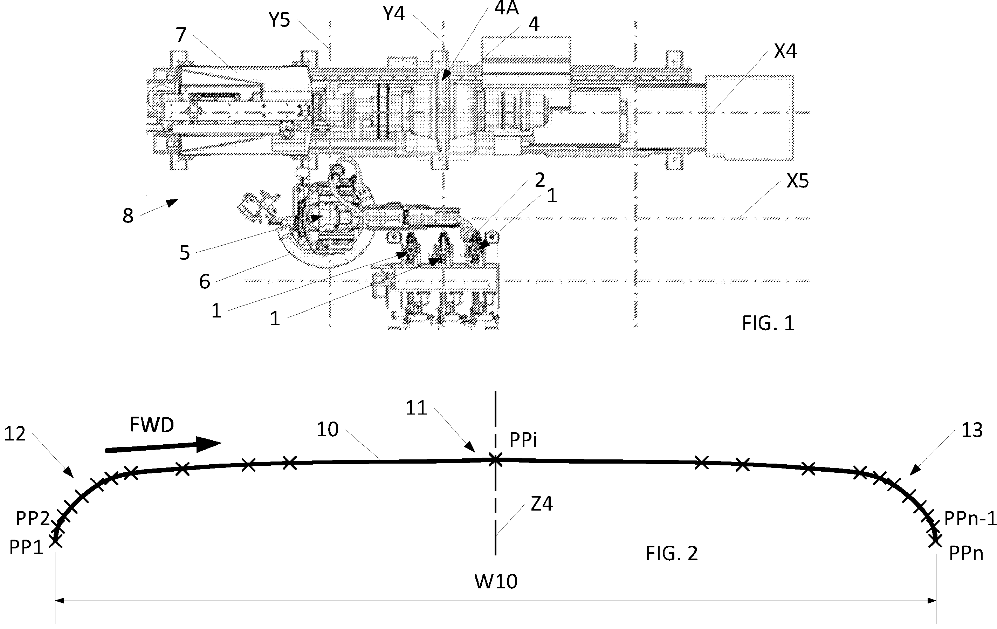

De préférence, l'installation 8 selon l'invention, qui comprend le noyau 4, le bâti de noyau 7 et le bras robotisé 5, dispose de plusieurs têtes de poses 1, interchangeables, tel que cela est visible sur la figure 1.

Chacune desdites têtes de pose 1 peut être avantageusement alimentée en un composant de bandage différent.

Le bras robotisé 5 peut ainsi sélectionner la tête 2 qui correspond au composant de bandage à poser, et au besoin changer de tête de pose 1 au cours d'un cycle de fabrication, afin de pouvoir poser successivement plusieurs composants de bandage sur le noyau 4.

La face réceptrice 4A du noyau présente, le long de l'axe central X4, un profil 10 prédéterminé, comme cela est illustré sur la figure 2.

Ledit profil 10 correspond à l'intersection de la face réceptrice 4A avec un plan de coupe dit « plan méridien » qui contient l'axe central X4.

Tel que cela est visible sur les figures 1 et 2, le noyau 4 présente de préférence une forme de révolution autour de son axe central X4, et plus particulièrement une forme toroïdale, qui confère à la face réceptrice 4A un profil 10 galbé, ici de forme incurvée convexe, globalement bombée vers l'extérieur.

De préférence, ledit profil 10 comprend une zone centrale quasiment plate, qui correspond au sommet 11 du bandage qui portera la bande de roulement et viendra au contact de la route, zone centrale qui est bordée, à chacune de ses extrémités axiales, par des zones incurvées, dont le rayon de courbure est compris dans une plage de valeurs très inférieures à la plage de valeur du ou des rayons de courbure du sommet 11. Ces zones incurvées qui correspondent aux épaules 12, 13 du bandage, c'est-à-dire aux parties du bandage qui forment la transition entre le sommet 11 et les flancs du bandage qui s'étendent radialement vers l'axe central X4 pour venir en prise sur une jante.

Selon l'invention, le procédé de définition de trajectoire de pose comprend une étape (a) de caractérisation géométrique du profil 10, au cours de laquelle on fournit le tracé du profil 10 de la face réceptrice 4A et l'on isole sur ce profil 10 un premier jeu de points remarquables PP1, PP2..., PPi..., PPn-1, PPn, dit « points remarquables géométriques » PP1, PP2..., PPi..., PPn-1, PPn, qui sont jugés caractéristiques de la forme dudit profil 10, et donc représentatifs du profil 10, et l'on stocke lesdits points remarquables géométriques PP1, PP2..., PPi..., PPn-1, PPn sous forme d'un jeu de points de trajectoire dit « table de trajectoire », tel que cela est visible sur la figure 2.

L'indice « n » correspond à un nombre entier, et « i » désigne le i-ème point de la série de points, la valeur de i étant comprise entre 1 et n.

La table de trajectoire contient au moins les coordonnées spatiales desdits points remarquables géométriques, exprimées dans un référentiel attaché au bras robotisé 5, et plus particulièrement attaché à l'embase 6 fixe dudit bras robotisé 5, par rapport à laquelle le bras robotisé 5 exécute les déplacements de la tête de pose 1.

On notera que, dans l'absolu, la table de trajectoire, c'est-à-dire le jeu de points de trajectoire, peut prendre toute forme adaptée, et plus précisément toute forme adaptée de stockage numérique de données, par exemple la forme d'une liste ou d'un tableau. De façon particulièrement préférentielle, la table de trajectoire prendra la forme d'un tableau, où chaque point de trajectoire formera une ligne dudit tableau.

Dans tous les cas, les points de trajectoire, et ici en particulier les lignes du tableau, seront de préférence ordonnés conformément à l'ordre dans lequel lesdits points de trajectoire se succèdent le long du profil 10, en considération d'un sens de parcours donné du profil 10, noté FWD, selon lequel on parcourt le profil 10 d'une extrémité à l'autre dudit profil 10. En d'autres termes, les points de trajectoires contenus dans la table de trajectoire seront de préférence ordonnés, dans ladite table de trajectoire, dans le sens des abscisses curvilignes croissantes le long du profil 10.

Les n points remarquables géométriques PPi sont donc ici stockés dans ladite table de trajectoire, de préférence sous forme de lignes successives correspondant chacune à un point remarquable, dans l'ordre qui correspond au sens de parcours FWD.

De préférence, tel que cela est visible sur la figure 2, les points remarquables géométriques PP1, PP2..., PPi..., PPn-1, PPn sont d'autant plus proches les uns des autres, et donc les tronçons adjacents de profil 10 que lesdits points remarquables géométriques délimitent deux à deux sont d'autant plus courts, que le rayon de courbure du profil 10 est faible. Ainsi, on considérera davantage de points remarquables géométriques, formant un réseau plus serré, dans les portions fortement incurvées du profil 10, telles que les épaules 12, 13, tandis que l'on espacera lesdits points remarquables géométriques dans les portions plus droites du profil, telles que le sommet 11.

A titre indicatif, et notamment pour des profils 10 qui présentent une largeur axiale W10 hors-tout comprise entre 150 mm et 370 mm, le nombre n de points remarquables géométriques fournis sera de préférence compris entre 20 et 60, plus préférentiellement entre 30 et 40.

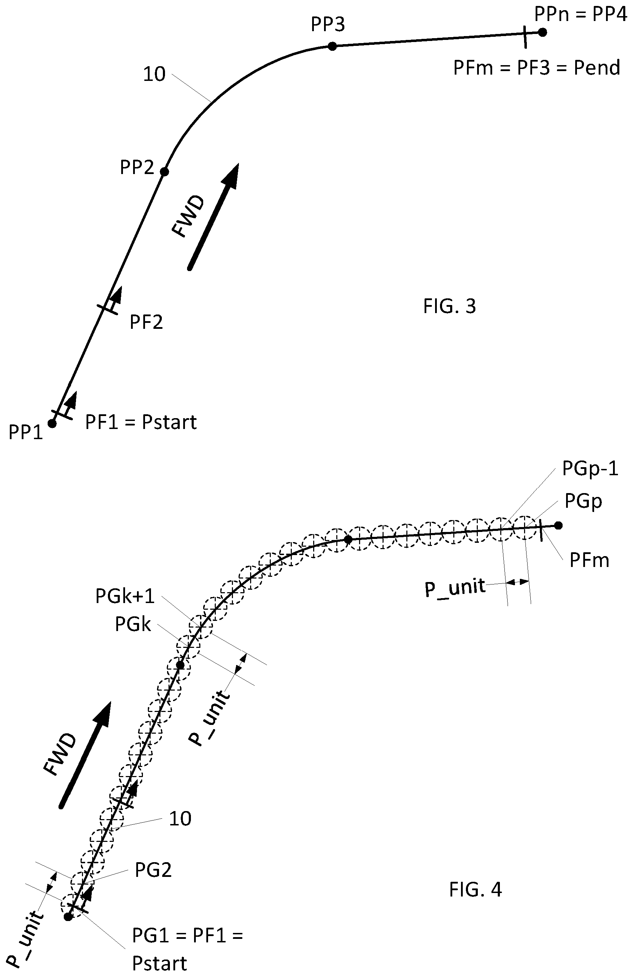

Ceci étant, on notera que sur l'exemple schématique des figures 3 et suivantes, on utilisera, par simplicité de description, un profil 10 intentionnellement raccourci et simplifié, sur lequel on a identifié seulement n=4 points remarquables géométriques PP1, PP2, PP3, PP4.

Selon l'invention, le procédé de définition de trajectoire de pose comprend également une étape (b) de caractérisation fonctionnelle du profil 10, au cours de laquelle on détermine sur le profil 10 une pluralité de zones fonctionnelles qui s'étendent chacune depuis un point de départ de zone jusqu'à un point de fin de zone, et l'on associe à chacune desdites zones fonctionnelles une loi de pose qui spécifie des conditions de pose du composant de bandage 2 dans la zone fonctionnelle considérée, et l'on insère lesdits points de départ de zone et lesdits points de fin de zone, qui forment un second jeu de points remarquables PF1, PF2..., PFj..., PFm-1, PFm, dits « points remarquables fonctionnels » PF1, PF2..., PFj..., PFm-1, PFm, dans la table de trajectoire.

L'indice « m » correspond à un nombre entier, et « j » désigne le j-ème point de la série de points, la valeur de j étant comprise entre 1 et m.

Typiquement, on pourra prévoir jusqu'à 20, 25 voire 30 zones fonctionnelles. En pratique, m pourra être compris entre 3 et 30, plus préférentiellement entre 5 et 10.

De préférence, lors de l'étape (b) de caractérisation fonctionnelle du profil, on associe à chacune des zones fonctionnelles une loi de pose qui caractérise les conditions de pose du composant de bandage dans la zone fonctionnelle considérée en spécifiant la valeur, applicable et constante dans la zone considérée, d'au moins un paramètre de pose, de préférence de plusieurs paramètres de pose, et encore plus préférentiellement de l'ensemble des paramètres de pose, parmi :
(i) la nature du composant de bandage 2 ; par exemple, on peut ainsi spécifier si l'on doit poser une bande de caoutchouc cru, un fil de renfort, ou une bande de renfort ;
(ii) le pas de pose selon lequel on décale la tête de pose 1 par rapport au noyau 4 le long de l'axe central entre deux spires successives ; ledit pas de pose correspond au déplacement de la tête de pose le long du profil par tour complet de noyau, donc au pas de l'hélice que forme le composant de bandage considéré sur le noyau, et l'on pourra par exemple définir grâce à ce paramètre de pas de pose le taux de chevauchement axial entre deux spires consécutives d'une bande de caoutchouc ou d'une bande de renfort, et ainsi contrôler l'épaisseur radiale de la couche qui résulte de l'enroulement desdites spires ; on notera que, dans l'absolu, on pourrait envisager de déplacer axialement le noyau 4 par rapport au bâti de noyau 7 afin de créer un mouvement axial relatif du noyau 4 par rapport à la tête de pose 1 ; toutefois, le noyau 4 sera de préférence fixe axialement, et le mouvement de déplacement axial relatif généré uniquement par le déplacement de la tête de pose 1, qui permettra donc de définir et contrôler ledit pas de pose ;
(iii) la vitesse de pose qui correspond à la vitesse circonférentielle du noyau 4 à laquelle le composant de bandage 2 est enroulé sur ledit noyau ; et/ou
(iv) la tension de pose, qui correspond à l'effort de traction longitudinale qui s'exerce au sein du composant de bandage 2 au cours de la pose, sous l'effet tracteur du noyau 4 en rotation.

En pratique, les points remarquables fonctionnels PF1, PF2..., PFj..., PFm-1, PFm marqueront les limites à partir desquelles, le long du profil 10, on débute l'exécution d'une loi de pose, on termine l'exécution d'une loi de pose, ou l'on franchit la transition entre une première loi de pose et une seconde loi de pose qui diffère de la première loi de pose, et plus particulièrement une seconde loi de pose qui modifie la valeur d'au moins l'un des paramètres de pose, ou de plusieurs des paramètres de pose, par rapport à ladite première loi de pose qui la précède.

Les lois de pose établiront par ailleurs, par exemple en spécifiant le pas de pose, un lien entre d'une part la position angulaire et/ou la vitesse angulaire du noyau 4 par rapport à son axe central X4 et d'autre part la position ainsi que l'évolution de la position de la tête de pose 1 le long du profil 10, pour permettre un asservissement des déplacements de la tête de pose 1 en fonction de la position angulaire du noyau 4.

Par commodité, les lois de pose, et donc les points remarquables fonctionnels PFj qui les caractérisent, pourront être initialement définis en considération de l'abscisse curviligne du profil 10, ce qui revient à considérer fictivement le profil 10 sous une forme développée rectiligne, c'est-à-dire sous forme d'un segment de droite fictif, et à fixer les points remarquables fonctionnels PFj comme autant de jalons sur ledit segment de droite fictif. Les coordonnées spatiales des points remarquables fonctionnels PFj seront alors déterminées en exécutant l'opération inverse, c'est-à-dire en appliquant la développée, porteuse desdits points, sur le tracé réel, incurvé, du profil 10.

On notera que, dans l'exemple schématique de la figure 3, seulement m = 3 points remarquables fonctionnels PF1, PF2, PF3 ont été considérés, ici représentés par des tirets perpendiculaires au profil, et parmi lesquels le premier point remarquable fonctionnel PF1 forme un point départ à partir duquel on entre dans une première zone fonctionnelle et l'on débute la pose d'un composant de bandage 2 sur le noyau 4, conformément à une première loi de pose, le second point remarquable fonctionnel PF2 indique l'entrée dans une seconde zone fonctionnelle caractérisée par une modification d'un paramètre de pose, par exemple une réduction du pas de pose, de sorte que l'on applique une seconde loi de pose à partir dudit second point remarquable fonctionnel PF2, et le troisième et dernier point remarquable fonctionnel PF3 indique le point d'arrivée où s'achève l'opération de pose, en l'occurrence à la fin de la seconde zone fonctionnelle, et donc conformément à la seconde loi de pose.

On notera qu'il est possible, dans l'absolu, qu'un ou plusieurs points remarquables fonctionnels PFj puissent coïncider avec un ou respectivement certains des points remarquables géométriques PPi. Cependant, de préférence, au moins une partie des points remarquables fonctionnels PFj, le cas échéant plus de la moitié des points remarquables fonctionnels PFj, voire la totalité des points remarquables fonctionnels PFj, seront en principe distincts des points remarquables géométriques PPi, dans la mesure où la définition des lois de pose et les ajustements dans les lois de pose successives, par exemple dans le choix du composant de bandage 2 ou de la position à partir de laquelle on commence à poser, respectivement on cesse de poser, ledit composant de bandage, peuvent en pratique être associés à des positions sur le profil 10 qui ne coïncident pas avec des points de définition purement géométrique du profil 10.

Par ailleurs, s'il est possible que les zones fonctionnelles successives soit adjacentes, de sorte à couvrir en continu le profil 10, il est également possible, dans certains cycles de fabrication, de prévoir, entre deux portions du profil 10 qui doivent être recouvertes par un ou des composants de bandage, une portion du profil 10 dite « zone d'interruption de couverture » qui ne doit pas être recouverte par un quelconque composant de bandage au cours du cycle de fabrication considéré, auquel cas on retrouve un intervalle d'interruption correspondant entre les deux zones fonctionnelles qui respectivement précède et suive immédiatement ladite zone d'interruption de couverture, de sorte que lesdites zones fonctionnelles successives ne sont, de fait, pas adjacentes.

Par commodité et concision de rédaction, on pourra utiliser l'expression générique plurielle « points remarquables », ou « points remarquables géométriques et fonctionnels », pour viser indifféremment à la fois les points remarquables géométriques PPi et les points remarquables fonctionnels PFj, et, plus particulièrement pour désigner tout ensemble qui regroupera ou sera susceptible de regrouper aussi bien des points remarquables géométriques PPi que des points remarquables fonctionnels PFj. De même, on pourra désigner individuellement par l'expression générique « point remarquable » ou « point remarquable géométrique ou fonctionnel », un point remarquable qui peut être indifféremment, selon le contexte, un point remarquable géométrique PPi ou un point remarquable fonctionnel PPj.

Selon l'invention, le procédé de définition de trajectoire de pose comprend ensuite, après l'identification des points remarquables géométriques et fonctionnels PPi, PFj, une étape (c) de maillage au cours de laquelle, en considération d'un sens de parcours prédéterminé du profil, noté ici FWD, on définit sur le profil 10, depuis le premier point remarquable fonctionnel PF1, c'est-à-dire depuis le point de début de la première zone fonctionnelle, pris pour origine, jusqu'au dernier point remarquable fonctionnel PFm, c'est-à-dire jusqu'au point de fin de la dernière zone fonctionnelle, une série de points virtuels PG1, PG2..., PGk..., PGp-1, PGp, équidistants, dits « points de guidage potentiels » PG1, PG2..., PGk..., PGp-1, PGp, qui délimitent deux à deux des segments de droite présentant tous une longueur identique, égale à une valeur choisie prédéterminée, dite « pas de résolution unitaire » P_unit, tel que cela est illustré sur la figure 4, et l'on insère lesdits points de guidage potentiels PG1, PG2..., PGk..., PGp-1, PGp dans la table de trajectoire.

L'indice « p » correspond à un nombre entier, et « k » désigne le k-ième point de la série de points.

De préférence, la valeur du pas de résolution unitaire P_unit qui sépare deux à deux les points de guidage potentiels PG1, PG2..., PGk..., PGp-1, PGp créés lors de l'étape (c) de maillage est comprise entre 0,1 mm et 1 mm, par exemple égale à 0,5 mm.

Une telle valeur permettra en effet d'obtenir une résolution suffisamment fine, et donc une précision suffisante, dans les portions géométriquement les plus complexes du profil 10, et/ou dans les zones fonctionnelles les plus difficiles, et donc à plus forte raison dans les portions plus simples du profil 10. Cette valeur correspondra donc à l'optimum de précision que peut offrir le procédé.

A titre indicatif, compte tenu de la longueur développée du profil 10 et du pas de résolution unitaire P_unit envisagés, le nombre initial de points de guidage potentiels issus de l'opération de maillage « brut », c'est-à-dire le nombre p, pourra être compris entre 500 (cinq cents) et 8 000 (huit-mille), par exemple entre 2 000 et 5 000.

A ce stade, à l'issue de l'étape (c) de maillage, on obtient donc en tout état de cause une table de trajectoire « brute », qui contient, provisoirement, l'ensemble des points remarquables géométriques PPi, l'ensemble des points remarquables fonctionnels PFj, et l'ensemble des points de guidage potentiels PGk.

A titre indicatif, la table de trajectoire brute peut ainsi compter au moins 500 points, au moins 1 000 (mille) points, voire au moins 2 000 (deux-mille) points, et parfois jusqu'à 8 000 (huit-mille) points de trajectoire.

Comme cela a été évoqué plus haut, il n'est cependant pas nécessaire, en pratique, de conserver sur tout le profil 10 ce maillage initial homogène dont la maille, très fine, est égale, voire localement inférieure, au pas de résolution unitaire P_unit. Il est en effet possible d'utiliser une résolution moins fine, et donc un pas plus grand, dans les portions du profil 10 dans lesquelles la direction du profil 10 et la loi de pose varient peu ou pas, aussi longtemps qu'aucun changement notable n'affecte le tracé du profil 10 ou la loi de pose.

Parmi tous les points de guidage potentiels PGk initialement disponibles, insérés provisoirement dans la table de trajectoire, et plus globalement parmi l'ensemble des points de guidage potentiels PGk et des points remarquables géométriques PPi et fonctionnels PFj présents dans la table de trajectoire et formant donc autant de points de trajectoire disponibles, certains seront par conséquent effectivement retenus pour faire partie de la table de trajectoire simplifiée 20 finale, d'autre pas, en fonction de leur utilité.

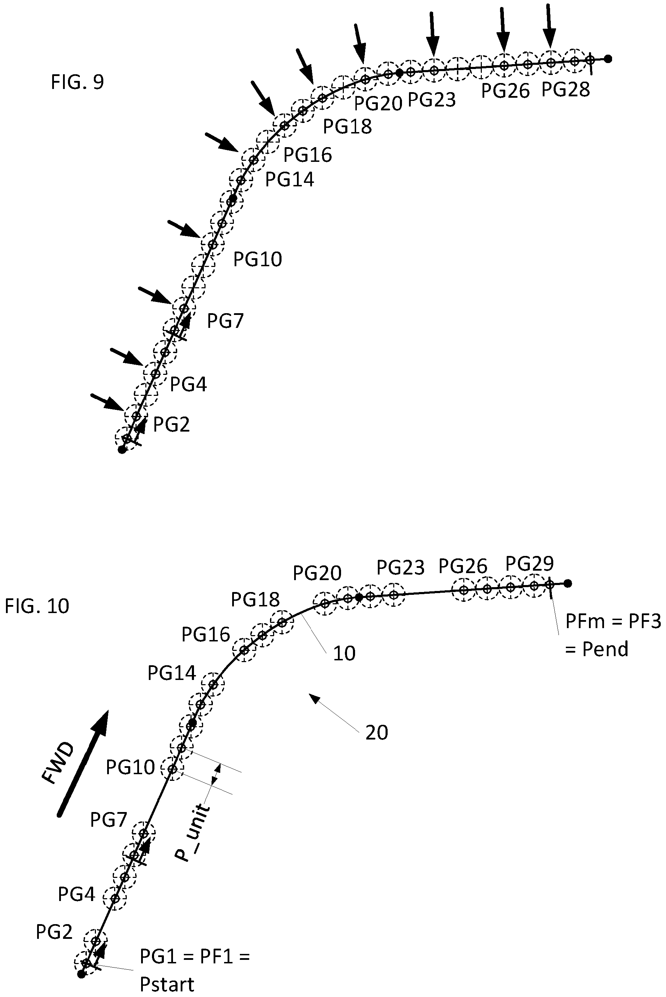

C'est pourquoi, selon l'invention, le procédé de définition de trajectoire de pose comprend ensuite, après l'étape (c) de maillage, une étape (d) de simplification au cours de laquelle on réduit la taille de la table de trajectoire en appliquant à la table de trajectoire un ou plusieurs critères de sélection afin de sélectionner au moins une partie, et seulement une partie, des points de guidage potentiels PGk et des points remarquables géométriques et fonctionnels PPi, PFj contenus dans la table de trajectoire, et en éliminant les points non sélectionnés, de sorte à obtenir, tel que cela est visible sur la figure 10, une table de trajectoire simplifiée 20, de taille réduite, au sein de laquelle au moins un et de préférence plusieurs des segments (de droite) qui relient deux à deux les points sélectionnés successifs présentent une longueur strictement supérieure au pas de résolution unitaire P_unit choisi.

On notera que, en pratique, seront conservés les points de trajectoire, et plus particulièrement les points de guidage potentiels PGk, qui correspondent à des singularités du profil 10 ou de la loi de pose, afin de concentrer la précision, et donc la puissance de calcul disponible, dans les portions du profil 10 qui le requièrent véritablement.

D'un point de vue formel, l'application de chaque critère de sélection peut être considérée comme une sous-étape de l'étape (d) de simplification.

Par convention et commodité de représentation, les points de guidage potentiels PGk apparaissent en pointillés sur les figures 3 à 10, et les points effectivement sélectionnés, et donc présents dans la table de trajectoire au moment considéré, sont signalés par de petits cercles en trait continu et dont la partie centrale est évidée. Des flèches indiquent les points qui sont ajoutés à la sélection (dite aussi « liste de points sélectionnés ») lors de la sous-étape considérée, en fonction du critère de sélection appliqué.

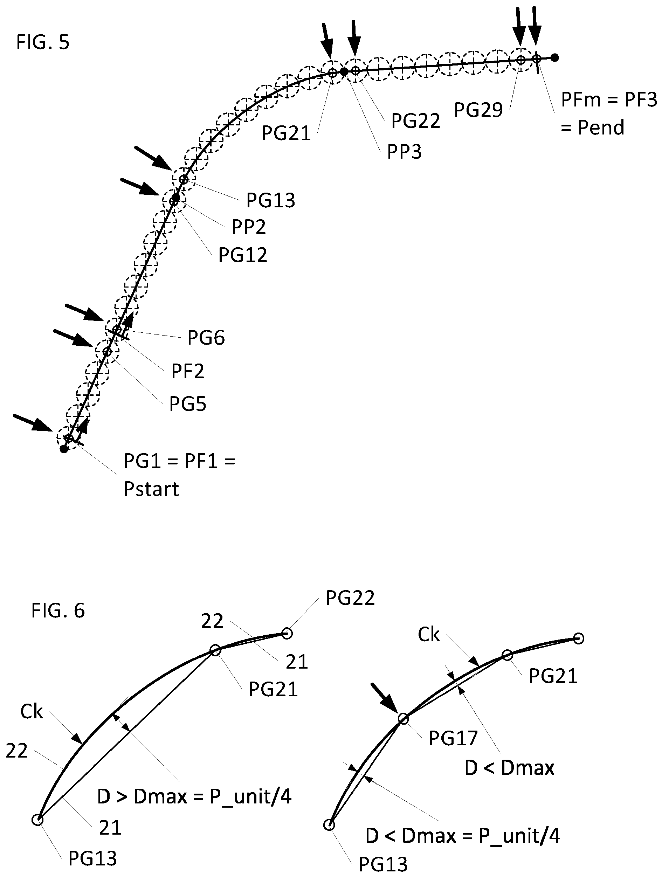

De préférence, lors de l'étape (d) de simplification, on applique un, en l'occurrence un premier, critère de sélection par encadrement, selon lequel, tel que cela est visible sur la figure 5, on sélectionne le premier point remarquable fonctionnel PF1, considéré comme point de départ Pstart de la trajectoire de pose, on sélectionne le dernier point remarquable fonctionnel PFm, considéré comme le point d'arrivée Pend de la trajectoire de pose, et, pour au moins un point géométrique ou fonctionnel PPi, PFj qui est strictement compris entre le point de départ Pstart et le point d'arrivée Pend, et plus préférentiellement pour chaque point remarquable géométrique ou fonctionnel PPi, PFj qui est strictement compris entre le point de départ Pstart et le point d'arrivée Pend, à savoir ici dans cet ordre PF2, PP2 puis PP3 sur l'exemple de la figure 5, on sélectionne, parmi les deux points de guidage potentiels PGk qui encadrent ledit point remarquable géométrique ou fonctionnel PPi, PFj, c'est-à-dire parmi le point de guidage potentiel qui précède immédiatement et le point de guidage potentiel qui suit immédiatement ledit point remarquable géométrique ou fonctionnel PPi, PFj, au moins l'un desdits deux points de guidage potentiels PGk, par exemple celui desdits deux points de guidage PGk qui est le plus proche du point remarquable géométrique ou fonctionnel PPi, PFj considéré.

Plus préférentiellement, pour l'au moins un ou respectivement pour chaque point remarquable PPi, PFj qui est strictement compris entre le point de départ Pstart et le point d'arrivée Pend, on sélectionne chacun des deux points de guidage potentiels PGk qui encadrent le point remarquable géométrique ou fonctionnel PPi, PFj considéré, c'est-à-dire qui pour l'un précède immédiatement et pour l'autre suit immédiatement ledit point remarquable géométrique ou fonctionnel PPi, PFj.

Sur la figure 5, cela revient à sélectionner PG5, PG6, qui encadrent PF2, puis PG12 et PG13, qui encadrent PP2, puis PG21 et PG22 qui encadrent PP3.

On pourra ainsi obtenir un lissage précis et équilibré des portions du profil dans lesquelles se situent les points remarquables PPi, PFj, en sélectionnant les deux points de guidage potentiels PGk qui sont situés de part et d'autre du point remarquable PPi, PFj considéré le long du profil 10.

Une telle sélection rendra avantageusement possible, sans induire d'erreur significative dans le suivi du profil 10 et des lois de pose, la substitution dudit point remarquable PPi, PFj par la paire correspondante de points de guidage potentiels PGk.

A ce titre, on notera que, de préférence, après avoir sélectionné, conformément au critère de sélection par encadrement, le ou de préférence les points de guidage potentiels PGk qui encadrent un point remarquable géométrique ou fonctionnel PPi, PFj strictement compris entre le point de départ Pstart et le point d'arrivée Pend, on supprime le point remarquable géométrique et fonctionnel PPi, PFj concerné.

Plus préférentiellement, tous les points remarquables géométriques et fonctionnels PPi, PFj strictement compris entre le point de départ Pstart et le point d'arrivée Pend feront l'objet d'un encadrement par un ou préférentiellement par deux points de guidage potentiel PGk selon ce premier critère de sélection, si bien que l'on sera amené de la sorte à supprimer tous lesdits points remarquables géométriques et fonctionnels PPi, PFj strictement compris entre le point de départ Pstart et le point d'arrivée Pend.

La suppression susmentionnée revient à « dé-selectionner » tous les points remarquables PPi, PFj qui sont concernés par le critère de sélection par encadrement, et donc à effacer de la table de trajectoire au moins une partie des, et préférentiellement tous les, points remarquables géométriques et fonctionnels PPi, PFj qui sont strictement compris entre le point de départ Pstart et le point d'arrivée Pend.

Une telle opération de suppression est avantageusement rendue possible par le fait que le point de guidage potentiel ou à plus forte raison les deux points de guidage potentiel PGk sélectionnés au voisinage de chaque point remarquable géométrique ou fonctionnel PPi, PFj concerné sont choisis parmi les deux points de guidage potentiels PGk qui encadrent ledit point remarquable PPi, PFj et qui se trouvent tous deux à très courte distance dudit point remarquable, en l'espèce à une distance qui est strictement inférieure au pas de résolution unitaire P_unit, de sorte qu'il n'est pas utile de conserver le point remarquable PPi, PFj pour satisfaire à l'obligation de précision souhaitée. En effet, une fois le ou les points de guidage potentiels PGk ainsi sélectionnés, le point remarquable géométrique ou fonctionnel PPi, PFj qui est à l'origine de cette sélection devient de fait redondant pour ce qui est de la définition de la trajectoire de pose, et peut donc être supprimé sans risque de fausser la trajectoire ou une loi de pose.

Cette suppression des points remarquables PPi, PFj ainsi « encadrés » par des points de guidage potentiels PGk permet en outre, en imposant un pas de séparation minimal entre deux points successifs, en l'occurrence en imposant une distance minimale égale au pas de résolution unitaire P_unit entre deux points de guidage potentiels PGk ainsi sélectionnés, de garantir que l'unité de commande, et plus particulièrement le calculateur pilotant le bras robotisé 5, sera bien en mesure de percevoir à temps, au regard de sa fréquence de rafraichissement, tous les points de la table de trajectoire, utilisés comme points de consigne successifs, lorsque la tête de pose 1 sera en mouvement, de sorte que l'asservissement du bras robotisé 5 ne sera pas perturbé par une trop grande proximité entre deux points.

La suppression des points remarquables PPi, PFj encadrés par des points de guidage potentiels PGk sélectionnés est de préférence immédiate, de manière à ce que lesdits points remarquables PPi, PFj ne participent plus en tant que tels à la sélection ultérieure des points de trajectoire lors de l'application des critères de sélection qui suivent l'application du critère de sélection par encadrement.

Par ailleurs, comme il est rare que le dernier point remarquable fonctionnel PFm coïncide exactement avec l'un des points de guidage virtuel PGk, et que de surcroît il est souhaitable d'assurer la précision de la fin de l'opération de pose, notamment afin d'éviter un éventuel dépassement de la consigne ou un ralentissement trop brusque de la tête de pose 1, on sélectionnera de préférence également, toujours selon ce même critère d'encadrement, le point de guidage virtuel PGk qui précède immédiatement le dernier point remarquable fonctionnel PFm, ici donc PG29 sur la figure 5, tout en conservant également, comme indiqué plus haut, ledit dernier point remarquable fonctionnel PFm, qui constitue le point d'arrivée Pend.

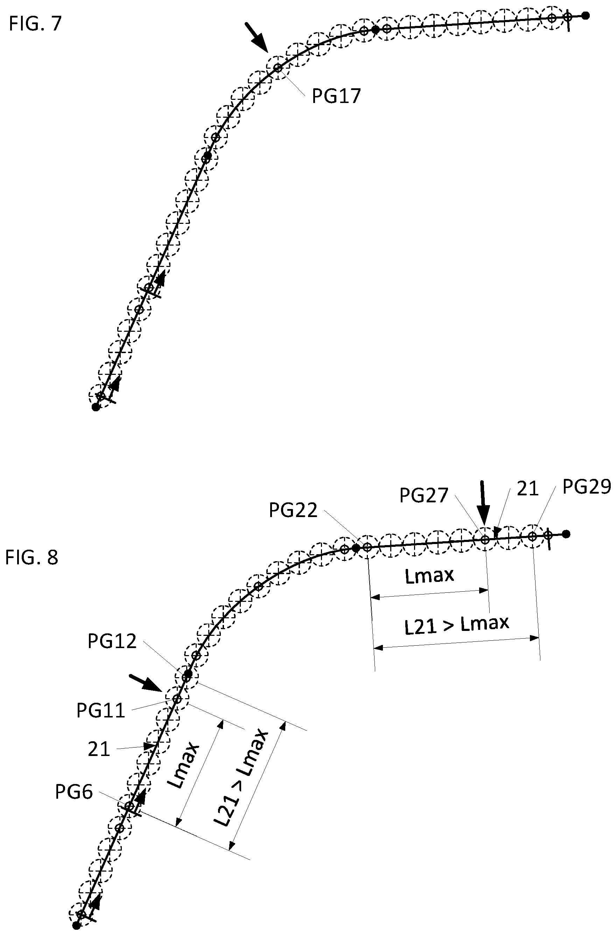

De préférence, lors de l'étape (d) de simplification, et plus préférentiellement suite à l'application du premier critère de sélection par encadrement décrit ci-dessus, on applique un, ici un second, critère de sélection, à savoir un critère de sélection par limite de déviation autorisée, selon lequel on considère, pour chaque paire de segments de droite adjacents définis par chaque trio de points successifs déjà sélectionnés, par exemple le trio PG13, PG21, PG22 sur les figures 5 à 7, le cercle interpolateur Ck qui passe par les trois points dudit trio, et, pour chacun des deux segments de droite 21 délimités par deux points successifs dudit trio de points, on calcule la flèche D entre ledit segment de droite 21, formant corde d'arc 21, et l'arc 22 de cercle interpolateur qui lui correspond, c'est-à-dire la plus grande distance D mesurée perpendiculairement au segment de droite 21 et qui sépare l'arc 22 dudit segment de droite 21, tel que cela est illustré sur la figure 6, et, si ladite flèche D calculée pour ledit segment 21 dépasse une valeur de déviation maximale autorisée Dmax prédéfinie, on ajoute à la liste des points sélectionnés le point de guidage potentiel PGk intermédiaire, ou l'un des points de guidage potentiels PGk intermédiaires, qui sont situés entre les points de guidage potentiels formant les extrémités du segment 21 considéré, tel que cela est visible sur les figures 6 et 7.

Préférentiellement on ajoute ainsi à la liste des points sélectionnés le point de guidage potentiel PGk qui se situe le plus près du milieu du segment de droite 21 concerné.

Dans l'exemple des figures 6 et 7, il s'agit du point de guidage potentiel PG17.

Avantageusement, on peut ainsi ajouter un point de trajectoire, et donc ramener la déviation correspondante à zéro, justement à l'endroit, ou au moins à proximité de l'endroit, où la déviation entre l'arc de cercle interpolateur 22 et le segment de corde d'arc 21 est initialement la plus importante.

Bien entendu, on pourra, après avoir ajouté un point à la sélection, réitérer l'application du critère de sélection par limite de déviation autorisée afin de s'assurer que le nouveau découpage en segments intégrant les points ajoutés satisfait audit critère, et au besoin procéder à un nouvel ajout de point pour garantir une proximité suffisante entre les segments (cordes d'arc) et les cercles interpolateurs.

Ainsi, on sera assuré que la trajectoire formée par la ligne brisée constituée par l'ensemble des points sélectionnés, et donc par la succession des segments de droite adjacents qui lient deux à deux ces points sélectionnés, passera toujours suffisamment près du tracé réel du profil 10, et constituera donc une approximation acceptable dudit profil 10.

De préférence, la valeur de déviation maximale autorisée Dmax sera choisie égale au quart du pas de résolution unitaire : Dmax = P_unit / 4

Ceci permettra à la trajectoire en segments de ne jamais dévier significativement du profil 10.

De préférence, lors de l'étape (d) de simplification, et plus préférentiellement après l'application du second critère de sélection par limite de déviation autorisée, on applique un, ici un troisième, critère de sélection, à savoir un critère de sélection par longueur de segment maximale autorisée, selon lequel, tel que cela est visible sur la figure 8, on calcule la longueur L21 de chaque segment de droite 21 ayant pour extrémités deux points déjà sélectionnés successifs et, si ladite longueur L21 calculée excède une valeur de longueur maximale autorisée Lmax prédéfinie, on ajoute à la liste des points sélectionnés l'un des points de guidage potentiels PGk qui se trouvent strictement compris entre les deux points formant les extrémités du segment 21 considéré, tel que cela est visible sur la figure 8.

Sur l'exemple de la figure 8, les deux segments 21 qui excèdent initialement la longueur maximale autorisée Lmax sont le segment joignant PG6 à PG12, et le segment joignant PG22 à PG29. Ceci conduit à l'ajout respectivement de PG11 et PG27 à la sélection.

De préférence on ajoutera, conformément à ce troisième critère de sélection par longueur de segment maximale autorisée, soit le point de guidage potentiel PGk qui forme avec le point de guidage potentiel PGk formant l'extrémité de début du segment 21 concerné le plus grand segment dont la longueur reste inférieure ou égale à la valeur de longueur maximale autorisée Lmax, comme cela est visible sur la figure 8, soit, en variante, le point de guidage potentiel PGk qui se situe le plus près du milieu du segment de droite 21 concerné.

Ici encore, on pourra bien entendu réitérer ce troisième critère de limitation de longueur autant de fois que nécessaire pour parvenir à une trajectoire dont l'ensemble des segments satisfont audit troisième critère, c'est-à-dire présentent tous une longueur inférieure ou égale à la longueur maximale autorisée Lmax.

En limitant la longueur maximale admissible pour les segments, c'est-à-dire la valeur de « vol libre » de la tête de pose 1, on évite de faire parcourir à l'aveugle à la tête de pose 1 une distance trop grande, et l'on évite ainsi notamment les risques ou les conséquences d'un éventuel dépassement ou d'une éventuelle dérive de la trajectoire réelle de la tête de pose 1 par rapport à la trajectoire spécifiée par les segments de la table de trajectoire et, plus globalement, par rapport au profil 10.

La valeur de longueur maximale autorisée Lmax pourra être fixée en tant que distance, ou bien, éventuellement, de manière sensiblement équivalente, en nombre maximal autorisé de points de guidage potentiels non encore sélectionnés présents entre deux points déjà sélectionnés, c'est-à-dire en taille d'espace de maillage « vide » entre deux points déjà sélectionnés.

A titre indicatif, la longueur maximale autorisée Lmax choisie pourra être comprise entre 10 mm et 50 mm.

De préférence, lors de l'étape (d) de simplification, et plus préférentiellement après avoir appliqué les différents critères de sélection décrits ci-dessus, on applique un, ici un quatrième, critère de sélection, à savoir un critère de sélection par degré de qualité, selon lequel on ajoute aux points déjà sélectionnés les N points de guidage potentiels qui précèdent immédiatement et les N points de guidage potentiels qui suivent immédiatement chacun desdits points déjà sélectionnés, N étant un entier, valant de préférence zéro par défaut, dont la valeur est fixée par l'utilisateur.

La valeur de N sera de préférence ajustée empiriquement, et plus particulièrement augmentée, par exemple portée à la valeur 1 ou 2, préférentiellement en fonction d'un essai au cours duquel on procède à la fabrication d'un bandage en utilisant la table de trajectoire simplifiée obtenue à l'issue de l'application du ou des critères précédents, ici les premier, second et troisièmes critères de sélection, puis on évalue la qualité du bandage obtenu et, si ladite qualité est jugée insuffisante, on incrémente la valeur N d'une unité.

Ce critère de sélection par degré de qualité permettra avantageusement d'améliorer la qualité de finition, notamment l'aspect du bandage et la qualité de jonction entre spires successives, en particulier dans les portions du profil 30 qui sont concernées par des changements de direction (virages).

En espèce, si l'on choisit N = 1, comme dans l'exemple illustré sur la figure 9, alors on ajoute à la table de trajectoire tout point de guidage potentiel PGk qui est immédiatement voisin d'un point qui aura été déjà précédemment sélectionné, ici en application de l'un des premier, second et troisième critères de sélection susmentionnés.

Ici, cela reviendra donc à ajouter à la sélection les points de guidage potentiels PG2, PG4, PG7, PG10, PG14, PG16, PG18, PG20, PG23, PG26 et PG28.

On élimine ensuite tous les points qui n'ont pas été sélectionnés à l'issue de l'application du ou des critères de sélection. On supprime ainsi notamment au moins tous les points de guidage potentiels PGk qui n'ont pas été sélectionnés, et de préférence aussi bien les points de guidage potentiels PGk qui n'ont pas été sélectionnés que les points remarquables, géométriques PPi et fonctionnels PFj, qui n'ont pas été sélectionnés.

En définitive, on obtient donc une table de trajectoire simplifiée 20, telle qu'illustrée sur la figure 10, où seule une partie des points remarquables PPi, PFj et, surtout, des points de guidage potentiels PGk, ont été retenus, et plus particulièrement ici au sein de laquelle seuls ont été retenus comme points de trajectoire définitifs les premier et dernier points remarquables fonctionnels PF1, PFm = PF3 d'une part, et une partie des points de guidage potentiels d'autre part, tels qu'ils ont été identifiés par les premier, second, troisième et quatrième critères de sélection ci-dessus, appliqués dans cet ordre.

Dans l'exemple des figures 3 à 10, on aura ainsi retenu, en sus des points remarquables fonctionnels PF1 = Pstart et PF3 = Pend, les séries de points de guidage potentiels suivantes : PG1 (qui se confond par définition avec PF1) à PG2, PG4 à PG7, PG10 à PG14, PG16 à PG18, PG20 à PG23, et PG26 à PG29, qui précède immédiatement PF3.

Les « trous » qui séparent lesdites séries de points l'une de l'autre forment autant d'allègements de la table de trajectoire.

A titre indicatif, on notera que le nombre de points de trajectoire finalement sélectionnés, et donc le nombre total de points de trajectoire stockés, sous forme de lignes de tableau, dans la table de trajectoire simplifiée 20, est de préférence compris entre 150 (cent cinquante) points et 1 000 (mille) points.

En tout état de cause, le ratio d'allègement, qui est égal au rapport entre la taille de la table de trajectoire simplifiée 20 obtenue après application des critères de sélection et la taille de la table de trajectoire « brute » issue de l'étape (c) de maillage, c'est-à-dire au rapport entre le nombre de points de trajectoire finalement sélectionnés et donc contenus dans la table de trajectoire simplifiée 20 d'une part et le nombre maximal potentiel de points de trajectoire représenté par la somme de tous les points remarquables PPi, PFj et de tous les points de guidage potentiels Gk initialement disponibles à l'issue de l'étape (c) de maillage brut d'autre part, est de préférence sensiblement compris entre 1/10 et 1/30, soit une réduction de taille de la table de trajectoire d'un facteur 10, 20, voire 30.

Le procédé selon l'invention est donc particulièrement performant pour alléger l'asservissement de la tête de pose 1 tout en conservant un excellent contrôle de la trajectoire de pose.

Bien entendu, l'invention concerne en tant que tel un procédé de fabrication d'un bandage au cours duquel on établit une table de trajectoire simplifiée 20 conformément à un procédé de définition de trajectoire selon l'une quelconque des possibilités décrites ci-dessus, et l'on transmet la table de trajectoire simplifiée 20 à un bras robotisé 5 portant la tête de pose 1, de sorte à ce que ledit bras robotisé 5 exécute ladite table de trajectoire simplifiée 20 en utilisant pour consigne la succession de segments qui relient les points sélectionnés successifs stockés dans ladite table de trajectoire simplifiée 20.

De préférence, la table de trajectoire simplifiée 20 associe chacun de ses points sélectionnés à un angle de rotation absolu du noyau 4, et l'on mesure, au cours de la rotation du noyau 4 autour de son axe central X4, l'angle de rotation absolu parcouru en rotation par ledit noyau 4 depuis une origine prédéfinie, et l'on asservit à l'angle de rotation du noyau la position conférée par le bras robotisé 5 à la tête de pose 1.

La table de trajectoire simplifiée 20 pourra avantageusement se présenter à cet effet sous forme d'un tableau comprenant les points stockés sous forme de lignes et dont la valeur d'entrée, typiquement la valeur stockée dans la première colonne de chaque ligne, indiquera l'angle de rotation correspondant au point considéré.

La position angulaire du noyau pourra être encodée par tout capteur approprié associé à l'axe central X4, tel qu'un codeur de type resolver.

Chaque ligne comprendra de préférence les coordonnées cibles (X, Y, Z) de la tête de pose 1 exprimées dans chacun des trois axes du référentiel cartésien (X5, Y5, Z5) attaché à l'embase 6 du bras robotisé 5, ainsi que, le cas échéant, l'orientation angulaire (W, P, R) de la tête de pose 1 en lacet, en roulis, et éventuellement en tangage, dans ledit référentiel.

Par convention, le « roulis » permettra à la tête de pose de basculer latéralement (ici autour de l'axe Y4, avec lequel se confond l'axe Y5) pour rester tangente à la courbure du profil 10 telle que cette courbure se dessine dans un plan méridien contenant l'axe central X4 et passant par le point de contact entre la tête de pose 1 et la face réceptrice 4A du noyau 4, tandis que le « lacet » correspondra à la rotation autour de l'axe (ici radial, et plus particulièrement vertical) qui est normal à la face réceptrice 4A au point de contact entre la tête de pose 1 et ladite face réceptrice 4A, et permettra d'orienter le composant de bandage 2 de sorte que la direction longitudinale dudit composant de bandage 2 coïncide avec la direction que forme l'angle d'hélice souhaité pour l'enroulement par rapport à la direction circonférentielle du noyau 4.

Ainsi, on peut par exemple procéder comme suit :
L'unité de commande, établit, conformément au procédé de définition de trajectoire décrit plus haut une table de trajectoire simplifiée 20, puis transmet la table de trajectoire simplifiée 20 au bras robotisé 5, et demande audit bras robotisé 5 d'exécuter le suivi des points contenus dans ladite table de trajectoire simplifiée 20. On notera que, comme indiqué précédemment, le bras robotisé 5 dispose d'une intelligence sommaire, c'est-à-dire de ses propres moyens de calcul et de stockage de données, existants mais limités, qui lui permettent d'exécuter, sous forme de segments linéaires, un suivi de consigne point à point fourni sous forme d'une table de trajectoire.

L'unité de commande ayant calculé la position angulaire du noyau 4 que l'on doit atteindre pour débuter l'opération de pose, c'est-à-dire la position angulaire qui correspond au point de départ Pstart de la première zone fonctionnelle, ladite unité de commande lance la rotation du noyau 4.

A une fréquence de rafraichissement déterminée, le bras robotisé 5 lit la position angulaire du noyau 4 grâce au codeur.

En fonction de ce retour sur la position angulaire du noyau 4, le bras robotisé 5 vient chercher dans la table de trajectoire simplifiée 20 la ligne à laquelle il se trouve, et donc les coordonnées de consigne applicables à l'instant considéré.

Une fois ladite ligne identifiée, le bras robotisé 5 vient lire, dans son propre référentiel (X5, Y5, Z5), les coordonnées X, Y, Z, W, P et R qui correspondent à sa position effective, et plus particulièrement à la position et à l'orientation effectives de la tête de pose 1.

Le bras robotisé 5 détermine alors, en comparant les coordonnées de consigne fournies par la ligne de la table de trajectoire simplifiée 20 d'une part aux coordonnées de sa propre position effective d'autre part, quelle distance (linéaire sur les axes X5, Y5, Z5 de positionnement, angulaire pour les rotations d'orientation en roulis, lacet, voire tangage) il doit parcourir pour atteindre les coordonnées X, Y, Z, W, P et R renseignées dans la table de trajectoire simplifiée.

Le bras robotisé 5 exécute alors un mouvement linéaire pour atteindre les coordonnées de consigne, c'est-à-dire pour atteindre le point de trajectoire spécifié dans la table de trajectoire simplifiée, et donc placer la tête de pose 1 dans la configuration souhaitée.

Ce cycle recommence jusqu'à ce que le noyau 4 atteigne la position angulaire finale calculée, c'est-à-dire le point d'arrivée Pend de la trajectoire de pose, à la fin de la dernière zone fonctionnelle, et que le bras robotisé 5 atteigne en conséquence le dernier point (ici la dernière ligne) de sa table de trajectoire simplifiée 20.

Par ailleurs, selon une caractéristique préférentielle qui peut constituer une invention à part entière, le procédé de fabrication peut comprendre, de préférence préalablement à l'exécution de la table de trajectoire simplifiée 20, et plus globalement préalablement à l'exécution de toute table de trajectoire, une étape d'étalonnage au cours de laquelle, au moyen d'un tachéomètre laser monté sur une station qui est située à un emplacement de référence choisi, et qui est distincte du bâti 7 dit « bâti de noyau » 7 qui porte le noyau 4 et le dispositif d' entraînement en rotation dudit noyau 4, et qui est également distincte de l'embase 6 du bras robotisé 5, on mesure la position de trois points cibles du bâti de noyau 7, afin d'identifier un premier référentiel cartésien (X4, Y4, Z4), dit « référentiel du noyau », attaché au bâti de noyau, par rapport à l'emplacement de la station du tachéomètre laser, puis l'on fixe une cible, telle qu'un coin-cube, à l'emplacement du bras robotisé 5 destiné à recevoir la tête de pose 1, ici donc sur le poignet, puis l'on déplace le bras robotisé 5 de manière à positionner successivement ladite cible en trois points différents de l'espace, et l'on mesure à chaque fois la position de ladite cible de sorte à identifier, par rapport au même emplacement de la station du tachéomètre laser, un second référentiel cartésien (X5, Y5, Z5), dit « référentiel du robot », attaché au bras robotisé 5, et plus précisément à l'embase 6 fixe dudit bras robotisé 5, et l'on calibre le bras robotisé 5 de manière à superposer le référentiel du robot (X5, Y5, Z5) avec le référentiel du noyau (X4, Y4, Z4), et ainsi faire coïncider les axes orthonormés desdits référentiels : X4 avec X5, Y4 avec Y5, Z4 avec Z5.

## Revendications

1. Procédé de pilotage d'une tête de pose (1), ladite tête de pose (1) étant destinée à poser au moins un composant de bandage (2) par enroulement dudit composant de bandage (2) en spires sur une face réceptrice (4A) d'un noyau (4) entraîné en rotation autour de son axe central (X4), ladite face réceptrice (4A) présentant, le long dudit axe central, un profil (10) prédéterminé, ledit procédé étant **caractérisé en ce qu'**il comprend
- une étape (a) de caractérisation géométrique du profil, au cours de laquelle on fournit le tracé du profil (10) de la face réceptrice (4A) et l'on isole sur ce profil (10) un premier jeu de points remarquables, dit « points remarquables géométriques » (PP1, PP2..., PPi..., PPn-1, PPn), qui sont jugés caractéristiques de la forme dudit profil (10), et l'on stocke lesdits points remarquables géométriques (PP1, PP2..., PPi..., PPn-1, PPn) sous forme d'un jeu de points de trajectoire dit « table de trajectoire »,
- une étape (b) de caractérisation fonctionnelle du profil, au cours de laquelle on détermine sur le profil une pluralité de zones fonctionnelles qui s'étendent chacune depuis un point de départ de zone jusqu'à un point de fin de zone, et l'on associe à chacune desdites zones fonctionnelles une loi de pose qui spécifie des conditions de pose du composant de bandage dans la zone fonctionnelle considérée, et l'on insère lesdits points de départ de zone et lesdits points de fin de zone, formant un second jeu de points remarquables dits « points remarquables fonctionnels » (PF1, PF2..., PFj..., PFm-1, PFm), dans la table de trajectoire,
- puis une étape (c) de maillage au cours de laquelle, en considération d'un sens de parcours (FWD) prédéterminé du profil, on définit sur le profil (10), depuis le premier point remarquable fonctionnel (PF1), c'est-à-dire depuis le point de début de la première zone fonctionnelle, pris pour origine, jusqu'au dernier point remarquable fonctionnel (PFm), c'est-à-dire jusqu'au point de fin de la dernière zone fonctionnelle, une série de points virtuels (PG1, PG2..., PGk..., PGp-1, PGp) équidistants, dits « points de guidage potentiels » (PG1, PG2..., PGk..., PGp-1, PGp), qui délimitent deux à deux des segments de droite présentant tous une longueur identique, égale à une valeur choisie prédéterminée, dite « pas de résolution unitaire » (P_unit), et l'on insère lesdits points de guidage potentiels (PG1, PG2..., PGk..., PGp-1, PGp) dans la table de trajectoire,
- puis une étape (d) de simplification au cours de laquelle on réduit la taille de la table de trajectoire en appliquant à la table de trajectoire un ou plusieurs critères de sélection afin de sélectionner au moins une partie, et seulement une partie, des points de guidage potentiels (PGk) et des points remarquables géométriques et fonctionnels (PPi, PFj) contenus dans la table de trajectoire, et en éliminant les points non sélectionnés, de sorte à obtenir une table de trajectoire simplifiée (20), de taille réduite, au sein de laquelle au moins un et de préférence plusieurs des segments qui relient deux à deux les points sélectionnés successifs présentent une longueur strictement supérieure au pas de résolution unitaire (P_unit) choisi.

2. Procédé selon la revendication 1 **caractérisé en ce que**, lors de l'étape (d) de simplification, on applique un critère de sélection par encadrement, selon lequel on sélectionne le premier point remarquable fonctionnel (PF1), considéré comme point de départ (Pstart) de la trajectoire de pose, on sélectionne le dernier point remarquable fonctionnel (PFm), considéré comme le point d'arrivée (Pend) de la trajectoire de pose, et, pour au moins un, et de préférence pour chaque, point remarquable géométrique ou fonctionnel (PPi, PFj) qui est strictement compris entre le point de départ (Pstart) et le point d'arrivée (Pend), on sélectionne, parmi les deux points de guidage potentiels (PGk) qui encadrent ledit point remarquable géométrique ou fonctionnel (PPi, PFj), c'est-à-dire parmi le point de guidage potentiel qui précède immédiatement et le point de guidage potentiel qui suit immédiatement ledit point remarquable géométrique ou fonctionnel (PPi, PFj), au moins l'un desdits deux points de guidage potentiels (PGk), par exemple celui desdits deux points de guidage (PGk) qui est le plus proche du point remarquable géométrique ou fonctionnel (PPi, PFj) considéré.

3. Procédé selon la revendication 2 **caractérisé en ce que**, pour l'au moins un, ou respectivement pour chaque, point remarquable géométrique ou fonctionnel (PPi, PFj) qui est strictement compris entre le point de départ (Pstart) et le point d'arrivée (Pend), on sélectionne chacun des deux points de guidage potentiels (PGk) qui encadrent, c'est-à-dire qui pour l'un précède immédiatement et pour l'autre suit immédiatement, ledit point remarquable géométrique ou fonctionnel (PPi, PFj).

4. Procédé selon la revendication 2 ou la revendication 3 **caractérisé en ce que**, après avoir sélectionné, conformément au critère de sélection par encadrement, le ou les points de guidage potentiels (PGk) qui encadrent un point remarquable géométrique ou fonctionnel (PPi, PFj) strictement compris entre le point de départ (Pstart) et le point d'arrivée (Pend), on supprime ledit point remarquable géométrique ou fonctionnel (PPi, PFj) concerné.

5. Procédé selon l'une des revendications précédentes **caractérisé en ce que**, lors de l'étape (d) de simplification, on applique un critère de sélection par limite de déviation autorisée, selon lequel on considère, pour chaque paire de segments de droite adjacents définis par chaque trio de points successifs déjà sélectionnés, le cercle interpolateur (Ck) qui passe par les trois points dudit trio, et, pour chacun des deux segments de droite (21) délimités par deux points successifs dudit trio de points, on calcule la flèche (D) entre ledit segment de droite (21), formant corde d'arc, et l'arc (22) de cercle interpolateur qui lui correspond et, si ladite flèche (D) calculée pour ledit segment (21) dépasse une valeur de déviation maximale autorisée (Dmax) prédéfinie, on ajoute à la liste des points sélectionnés le ou l'un des points de guidage potentiels (PGk) intermédiaires qui sont situés entre les points de guidage potentiels formant les extrémités du segment (21) considéré, préférentiellement le point de guidage potentiel (PGk) qui se situe le plus près du milieu du segment de droite (21) concerné.

6. Procédé selon l'une des revendications précédentes **caractérisé en ce que**, lors de l'étape (d) de simplification, on applique un critère de sélection par longueur de segment maximale autorisée, selon lequel on calcule la longueur (L21) de chaque segment de droite (21) ayant pour extrémités deux points déjà sélectionnés successifs et, si ladite longueur (L21) calculée excède une valeur de longueur maximale autorisée (Lmax) prédéfinie, on ajoute à la liste des points sélectionnés l'un des points de guidage potentiels (PGk) qui se trouvent strictement compris entre les deux points formant les extrémités du segment (21) considéré, de préférence soit le point de guidage potentiel (PGk) qui forme avec le point de guidage potentiel formant l'extrémité de début du segment concerné le plus grand segment dont la longueur reste inférieure ou égale à la valeur de longueur maximale autorisée (Lmax), soit le point de guidage potentiel (PGk) qui se situe le plus près du milieu du segment de droite (21) concerné.

7. Procédé selon l'une des revendications précédentes **caractérisé en ce que**, lors de l'étape (d) de simplification, on applique un critère de sélection par degré de qualité, selon lequel on ajoute aux points déjà sélectionnés les N points de guidage potentiels (PGk) qui précèdent immédiatement et les N points de guidage potentiels (PGk) qui suivent immédiatement chacun desdits points déjà sélectionnés, N étant un entier, valant de préférence zéro par défaut, et dont la valeur est fixée par l'utilisateur, ladite valeur de N pouvant de préférence être ajustée empiriquement, et plus particulièrement augmentée, par exemple portée à la valeur 1 ou 2, préférentiellement en fonction d'un essai au cours duquel on procède à la fabrication d'un bandage en utilisant la table de trajectoire simplifiée obtenue à l'issue de l'application du ou des critères précédents, on évalue la qualité du bandage obtenu et, si ladite qualité est jugée insuffisante, on incrémente la valeur N d'une unité.

8. Procédé selon l'une des revendications précédentes **caractérisé en ce que** la valeur du pas de résolution unitaire (P_unit) qui sépare deux à deux les points de guidage potentiels (PG1, PG2..., PGk..., PGp-1, PGp) créés lors de l'étape (c) de maillage est comprise entre 0,1 mm et 1 mm, par exemple égale à 0,5 mm.

9. Procédé selon l'une des revendications précédentes **caractérisé en ce que**, lors de l'étape (b) de caractérisation fonctionnelle du profil, on associe à chacune des zones fonctionnelles une loi de pose qui caractérise les conditions de pose du composant de bandage (2) dans la zone fonctionnelle considérée, en spécifiant la valeur, applicable et constante dans la zone considérée, d'au moins un paramètre de pose et de préférence de plusieurs paramètres de pose parmi : (i) la nature du composant de bandage, (ii) le pas de pose selon lequel on décale la tête de pose (1) par rapport au noyau (4) le long de l'axe central (X4) entre deux spires successives, (iii) la vitesse de pose qui correspond à la vitesse circonférentielle du noyau (4) à laquelle le composant de bandage (2) est enroulé sur ledit noyau, et/ou (iv) la tension de pose, qui correspond à l'effort de traction longitudinale qui s'exerce au sein du composant de bandage (2) au cours de la pose, sous l'effet tracteur du noyau (4) en rotation.

10. Procédé de fabrication d'un bandage au cours duquel on établit une table de trajectoire simplifiée (20) conformément au procédé de pilotage d'une tête de pose selon l'une quelconque des revendications 1 à 9 et l'on transmet la table de trajectoire simplifiée (20) à un bras robotisé (5) portant la tête de pose (1), de sorte à ce que ledit bras robotisé (5) exécute ladite table de trajectoire simplifiée (20) en utilisant pour consigne la succession de segments qui relient les points sélectionnés successifs stockés dans ladite table de trajectoire simplifiée.

11. Procédé de fabrication d'un bandage selon la revendication 10 **caractérisé en ce que** la table de trajectoire simplifiée (20) associe chacun de ses points sélectionnés à un angle de rotation absolu du noyau, **en ce que** l'on mesure, au cours de la rotation du noyau (4) autour de son axe central (X4), l'angle de rotation absolu parcouru en rotation par ledit noyau depuis une origine prédéfinie, et **en ce que** l'on asservit à l'angle de rotation du noyau la position conférée par le bras robotisé (5) à la tête de pose (1).

12. Procédé de fabrication d'un bandage selon la revendication 10 ou 11 **caractérisé en ce qu'**il comprend, une étape d'étalonnage au cours de laquelle, au moyen d'un tachéomètre laser monté sur une station qui est située à un emplacement de référence choisi, et qui est distincte du bâti (7) dit « bâti de noyau » (7) qui porte le noyau (4) et le dispositif d'entraînement en rotation dudit noyau, et distincte de l'embase (6) du bras robotisé (5), on mesure la position de trois points cibles du bâti de noyau, afin d'identifier un premier référentiel cartésien (X4, Y4, Z4), dit « référentiel du noyau », attaché au bâti de noyau (7), par rapport à l'emplacement de la station du tachéomètre laser, puis l'on fixe une cible, telle qu'un coin-cube, à l'emplacement du bras robotisé (5) destiné à recevoir la tête de pose (1), on déplace le bras robotisé (5) de manière à positionner successivement ladite cible en trois points différents de l'espace, et l'on mesure à chaque fois la position de ladite cible de sorte à identifier, par rapport au même emplacement de la station du tachéomètre laser, un second référentiel cartésien (X5, Y5, Z5), dit « référentiel du robot », attaché au bras robotisé (5), et l'on calibre le bras robotisé (5) de manière à superposer le référentiel du robot (X5, Y5, Z5) avec le référentiel du noyau (X4, Y4, Z4), et ainsi faire coïncider les axes orthonormés desdits référentiels.

## Patentansprüche

1. Verfahren zur Steuerung eines Verlegekopfes (1), wobei der Verlegekopf (1) dazu bestimmt ist, mindestens eine Reifenkomponenten (2) durch Wickeln der Reifenkomponente (2) in Windungen auf eine Aufnahmeseite (4A) eines Kerns (4) zu verlegen, der um seine zentrale Achse (X4) drehangetrieben wird, wobei die Aufnahmeseite (4A), entlang der zentralen Achse, ein vorbestimmtes Profil (10) aufweist, wobei das Verfahren **dadurch gekennzeichnet ist, dass** es umfasst:
- einen Schritt (a) zur geometrischen Charakterisierung des Profils, bei dem der Verlauf des Profils (10) der Aufnahmeseite (4A) ausgegeben wird und an diesem Profil (10) ein erster Satz von Kennpunkten, "geometrische Kennpunkte" (PP1, PP2..., PPi..., PPn-1, PPn) genannt, die als charakteristisch für die Form des Profils (10) erachtet werden, isoliert wird, und die geometrischen Kennpunkte (PP1, PP2..., PPi..., PPn-1, PPn) in Form eines Trajektorienpunktesatzes, "Trajektorientabelle" genannt, gespeichert werden,
- einen Schritt (b) zur funktionalen Charakterisierung des Profils, bei dem an dem Profil eine Mehrzahl von funktionalen Bereichen bestimmt wird, die sich jeweils von einem Bereichsstartpunkt bis zu einem Bereichsendpunkt erstrecken, und jedem der funktionalen Bereich ein Verlegegesetz zugeordnet wird, das Verlegebedingungen der Reifenkomponente in dem betrachteten funktionalen Bereich spezifiziert, und die Bereichsstartpunkte und die Bereichsendpunkte, die einen zweiten Satz von Kennpunkten, "funktionale Kennpunkte" (PF1, PF2..., PFj..., PFm-1, PFm) genannt, in die Trajektorientabelle eingefügt werden,
- dann einen Schritt (c) zur Vermaschung, bei dem, unter Berücksichtigung einer vorbestimmten Laufrichtung (FWD) des Profils, an dem Profil (10), von dem ersten funktionalen Kennpunkt (PF1) aus, d. h. von dem Anfangspunkt des ersten funktionalen Bereichs aus, der als Ursprung genommen wird, bis zu dem letzten funktionalen Kennpunkt (PFm), d. h. bis zu dem Endpunkt des letzten funktionalen Bereichs, eine Reihe von äquidistanten virtuellen Punkten (PG1, PG2..., PGk..., PGp-1, PGp), "potentielle Führungspunkte" (PG1, PG2..., PGk..., PGp-1, PGp) genannt, definiert wird, die paarweise Geradensegmente begrenzen, die alle eine identische Länge gleich einem vorbestimmten gewählten Wert, "einheitliche Auflösungsschrittweite" (P_unit) genannt, aufweisen, und die potentiellen Führungspunkte (PG1, PG2..., PGk..., PGp-1, PGp) in die Trajektorientabelle eingefügt werden,
- dann einen Schritt (d) zur Vereinfachung, bei dem die Größe der Trajektorientabelle verringert wird, indem auf die Trajektorientabelle ein oder mehrere Auswahlkriterien angewandt werden, um mindestens einen Teil, und nur einen Teil, der potentiellen Führungspunkte (PGk) und der geometrischen und funktionalen Kennpunkte (PPi, PFj) auszuwählen, die in der Trajektorientabelle enthalten sind, und indem die nicht ausgewählten Punkte entfernt werden, so dass eine vereinfachte Trajektorientabelle (20) mit verringerter Größe erhalten wird, in der mindestens eines und bevorzugt mehrere der Segmente, die die aufeinander folgenden ausgewählten Punkte paarweise verbinden, eine Länge aufweisen, die strikt größer als die gewählte einheitliche Auflösungsschrittweite (P_unit) ist.

2. Verfahren nach Anspruch 1, **dadurch gekennzeichnet, dass** bei dem Schritt (d) zur Vereinfachung ein Kriterium zur Auswahl durch Einrahmung angewandt wird, gemäß dem der erste funktionale Kennpunkt (PF1) ausgewählt wird, der als Startpunkt (Pstart) der Verlegetrajektorie betrachtet wird, der letzte funktionale Kennpunkt (PFm) ausgewählt wird, der als Zielpunkt (Pend) der Verlegetrajektorie betrachtet wird, und für mindestens einen und bevorzugt für jeden geometrischen oder funktionalen Kennpunkt (PPi, PFj), der strikt zwischen dem Startpunkt (Pstart) und dem Zielpunkt (Pend) enthalten ist, unter den beiden potentiellen Führungspunkten (PGk), die den geometrischen oder funktionalen Kennpunkt (PPi, PFj) einrahmen, d. h. unter dem potentiellen Führungspunkt, der unmittelbar vorausgeht, und dem potentiellen Führungspunkt, der dem geometrischen oder funktionalen Kennpunkt (PPi, PFj) unmittelbar folgt, mindestens einer der beiden potentiellen Führungspunkte (PGk) ausgewählt wird, zum Beispiel derjenige der beiden Führungspunkte (PGk), der dem betrachteten geometrischen oder funktionalen Kennpunkt (PPi, PFj) am nächsten ist.

3. Verfahren nach Anspruch 2, **dadurch gekennzeichnet, dass** für mindestens einen beziehungsweise für jeden geometrischen oder funktionalen Kennpunkt (PPi, PFj), der strikt zwischen dem Startpunkt (Pstart) und dem Zielpunkt (Pend) enthalten ist, jeder der beiden potentiellen Führungspunkte (PGk) ausgewählt wird, die den geometrischen oder funktionalen Kennpunkt (Ppi, PFj) einrahmen, d. h. von denen einer ihm unmittelbar vorausgeht und der andere ihm unmittelbar folgt.

4. Verfahren nach Anspruch 2 oder Anspruch 3, **dadurch gekennzeichnet, dass**, nachdem gemäß dem Kriterium zur Auswahl durch Einrahmung der oder die potentiellen Führungspunkte (PGk) ausgewählt wurden, die einen geometrischen oder funktionalen Kennpunkt (PPi, PFj) einrahmen, der strikt zwischen dem Startpunkt (Pstart) und dem Zielpunkt (Pend) enthalten ist, der betreffende geometrische oder funktionale Kennpunkt (PPi, PFj) gelöscht wird.

5. Verfahren nach einem der vorhergehenden Ansprüche, **dadurch gekennzeichnet, dass** bei dem Schritt (d) zur Vereinfachung ein Kriterium zur Auswahl nach einem Grenzwert der zulässigen Abweichung angewandt wird, gemäß dem für jedes Paar aus benachbarten Geradensegmenten, die durch jedes Trio aus bereits ausgewählten aufeinander folgenden Punkten definiert werden, der interpolierende Kreis (Ck), der durch die drei Punkte des Trios verläuft, berücksichtigt wird und für jedes der beiden Geradensegmente (21), die durch zwei aufeinander folgende Punkte des Punktetrios begrenzt werden, die Pfeilhöhe (D) zwischen dem Geradensegment (21), das die Bogensehne bildet, und dem Bogen (22) des ihr entsprechenden interpolierenden Kreises berechnet wird und, wenn die für das Segment (21) berechnete Pfeilhöhe (D) einen vorgegebenen zulässigen maximalen Abweichungswert (Dmax) überschreitet, zu der Liste der ausgewählten Punkte der oder einer der potentiellen Zwischenführungspunkte (PGk) hinzugefügt wird, die zwischen den potentiellen Führungspunkten liegen, die die Enden des betrachteten Segments (21) bilden, bevorzugt der potentielle Führungspunkt (PGk), der dem Mittelpunkt des betrachteten Geradensegments (21) am nächsten liegt.

6. Verfahren nach einem der vorhergehenden Ansprüche, **dadurch gekennzeichnet, dass** bei dem Schritt (d) zur Vereinfachung ein Kriterium zur Auswahl nach der zulässigen maximalen Segmentlänge angewandt wird, gemäß dem die Länge (L21) jedes Geradensegments (21) berechnet wird, das als Enden zwei aufeinander folgende bereits ausgewählte Punkte hat, und, wenn die berechnete Länge (L21) den vorgegebenen zulässigen maximalen Längenwert (Lmax) übersteigt, zu der Liste der ausgewählten Punkte einer der potentiellen Führungspunkte (PGk) hinzugefügt wird, die sich strikt zwischen den beiden Punkten befinden, die die Enden des betrachteten Segments (21) bilden, bevorzugt entweder der potentielle Führungspunkt (PGk), der mit dem potentiellen Führungspunkt, der das Anfangsende des betreffenden Segments bildet, das größte Segment bildet, dessen Länge kleiner als oder gleich dem zulässigen maximalen Längenwert (Lmax) bleibt, oder der potentielle Führungspunkt (PGk), der dem Mittelpunkt des betreffenden Geradensegments (21) am nächsten liegt.

7. Verfahren nach einem der vorhergehenden Ansprüche, **dadurch gekennzeichnet, dass** bei dem Schritt (d) zur Vereinfachung ein Kriterium zur Auswahl nach dem Qualitätsgrad angewandt wird, gemäß dem zu den bereits ausgewählten Punkten die N potentiellen Führungspunkte (PGk) hinzugefügt werden, die unmittelbar vorausgehen, und die N potentiellen Führungspunkte (PGk), die auf jeden der bereits ausgewählten Punkte unmittelbar folgen, wobei N eine ganze Zahl ist, die bevorzugt standardmäßig den Wert null hat und deren Wert von dem Benutzer festgelegt wird, wobei der Wert von N bevorzugt empirisch angepasst werden kann und insbesondere erhöht werden kann, zum Beispiel auf den Wert 1 oder 2 gebracht werden kann, vorzugsweise in Abhängigkeit von einem Test, bei dem die Herstellung eines Reifens unter Verwendung der vereinfachten Trajektorientabelle vorgenommen wird, die nach der Anwendung des oder der vorhergehenden Kriterien erhalten wird, die Qualität des erhaltenen Reifens bewertet wird und, wenn die Qualität als ungenügend erachtet wird, der Wert N um eine Einheit inkrementiert wird.

8. Verfahren nach einem der vorhergehenden Ansprüche, **dadurch gekennzeichnet, dass** der Wert der einheitlichen Auflösungsschrittweite (P_unit), die die potentiellen Führungspunkte (PG1, PG2..., PGk..., PGp-1, PGp) paarweise trennt, die bei dem Schritt (c) zur Vermaschung erzeugt werden, zwischen 0,1 mm und 1 mm liegt, zum Beispiel 0,5 mm beträgt.

9. Verfahren nach einem der vorhergehenden Ansprüche, **dadurch gekennzeichnet, dass** bei dem Schritt (b) zur funktionalen Charakterisierung des Profils jedem der funktionalen Bereiche ein Verlegegesetz zugeordnet wird, das die Verlegebedingungen der Reifenkomponente (2) in dem betrachteten funktionalen Bereich charakterisiert, indem der in dem betrachteten Bereich anwendbare und konstante Wert mindestens eines Verlegeparameters und bevorzugt mehrerer Verlegeparameter spezifiziert wird unter: (i) der Art der Reifenkomponente, (ii) der Verlegeschrittweite, gemäß welcher der Verlegekopf (1) in Bezug auf den Kern (4) entlang der zentralen Achse (X4) zwischen zwei aufeinander folgenden Windungen versetzt wird, (iii) der Verlegegeschwindigkeit, die der Umfangsgeschwindigkeit des Kerns (4) entspricht, mit der die Reifenkomponente (2) auf den Kern gewickelt wird, und/oder (iv) der Verlegespannung, die der Längszugkraft entspricht, die innerhalb der Reifenkomponente (2) beim Verlegen unter der Zugwirkung des drehenden Kerns (4) ausgeübt wird.

10. Verfahren zur Herstellung eines Reifens, bei dem eine vereinfachte Trajektorientabelle (20) gemäß dem Verfahren zur Steuerung eines Verlegekopfes nach einem der Ansprüche 1 bis 9 erstellt wird und die vereinfachte Trajektorientabelle (20) an einen Roboterarm (5) übertragen wird, der den Verlegekopf (1) trägt, so dass der Roboterarm (5) die vereinfachte Trajektorientabelle (20) ausführt, indem er als Sollwert die Abfolge von Segmenten verwendet, welche die aufeinander folgenden ausgewählten Punkte verbinden, die in der vereinfachten Trajektorientabelle gespeichert sind.

11. Verfahren zur Herstellung eines Reifens nach Anspruch 10, **dadurch gekennzeichnet, dass** die vereinfachte Trajektorientabelle (20) jeden ihrer ausgewählten Punkte einem absoluten Drehwinkel des Kerns zuordnet, dadurch, dass bei der Drehung des Kerns (4) um seine zentrale Achse (X4) der absolute Drehwinkel gemessen wird, der von dem Kern von einem vorgegebenen Ursprung aus drehend zurückgelegt wird, und dadurch, dass die Position, die dem Verlegekopf (1) von dem Roboterarm (5) verliehen wird, in Abhängigkeit von dem Drehwinkel des Kerns geregelt wird.

12. Verfahren zur Herstellung eines Reifens nach Anspruch 10 oder 11, **dadurch gekennzeichnet, dass** es einen Schritt zur Kalibrierung umfasst, bei dem mittels eines Laser-Tachymeters, das auf einer Station montiert ist, die an einer gewählten Referenzposition gelegen ist und die von dem Gestell (7), "Kerngestell" (7) genannt, das den Kern (4) und die Drehantriebsvorrichtung des Kerns trägt, verschieden ist und von dem Sockel (6) des Roboterarms (5) verschieden ist, die Lage von drei Zielpunkten des Kerngestells gemessen wird, um ein erstes kartesisches Koordinatensystem (X4, Y4, Z4), "Koordinatensystem des Kerns" genannt, das dem Kerngestell (7) zugewiesen ist, in Bezug auf die Position der Station des Laser-Tachymeters zu identifizieren, dann ein Ziel wie eine Würfelecke an der Position des Roboterarms (5), der zum Aufnehmen des Verlegekopfes (1) bestimmt ist, befestigt wird, der Roboterarm (5) so bewegt wird, dass das Ziel nacheinander an drei verschiedenen Punkten des Raums positioniert wird, und jedes Mal die Lage des Ziels gemessen wird, so dass in Bezug auf dieselbe Position der Station des Laser-Tachymeters ein zweites kartesisches Koordinatensystem (X5, Y5, Z5), "Koordinatensystem des Roboters" genannt, das dem Roboterarm (5) zugewiesen ist, identifiziert wird, und der Roboterarm (5) so kalibriert wird, dass das Koordinatensystem des Roboters (X5, Y5, Z5) mit dem Koordinatensystem des Kerns (X4, Y4, Z4) überlagert wird und so die orthonormierten Achsen der Koordinatensysteme in Übereinstimmung gebracht werden.

## Claims

1. Method for controlling a laying head (1), said laying head being intended for laying at least one tyre component (2) by winding said tyre component (2) in turns on a receiving face (4A) of a core (4) rotated about its central axis (X4), said receiving face (4A) having, along said central axis, a predetermined profile (10), said method being **characterized in that** it comprises:
- a step (a) of geometric characterization of the profile, during which the outline of the profile (10) of the receiving face (4A) is provided and a first set of remarkable points, referred to as "geometric remarkable points" (PP1, PP2..., PPi..., PPn-1, PPn), are isolated on this profile, these points being considered to be characteristic of the shape of said profile (10), and said geometric remarkable points (PP1, PP2..., PPi..., PPn-1, PPn) are stored in the form of a set of path points referred to as the "path chart",
- a step (b) of functional characterization of the profile, during which a plurality of functional zones is determined on the profile, each of which extends from a zone start point to a zone end point, and a laying law is associated with each of said functional zones, which laying law specifies conditions for laying the tyre component in the functional zone in question, and said zone start points and said zone end points, forming a second set of remarkable points referred to as "functional remarkable points" (PF1, PF2..., PFj..., PFm-1, PFm), are inserted in the path chart,
- then a step (c) of meshing during which, with reference to a predetermined direction of travel (FWD) of the profile, a series of equidistant virtual points (PG1, PG2..., PGk..., PGp-1, PGp), referred to as "potential guide points" (PG1, PG2..., PGk..., PGp-1, PGp), which delimit in pairs line segments all having an identical length, equal to a predetermined chosen value, referred to as the "unit resolution pitch" (P_unit), are defined on the profile (10), from the first functional remarkable point (PF1), that is to say from the point at which the first functional zone begins, considered the origin, to the last functional remarkable point (PFm), that is to say to the point at which the last functional zone ends, and said potential guide points are inserted in the path chart,
- then a step (d) of simplification during which the size of the path chart is reduced by applying to the path chart one or more selection criteria in order to select at least some, and only some, of the potential guide points (PGk) and geometric and functional remarkable points (PPi, PFj) contained in the path chart, and by deleting the points not selected, in such a way as to obtain a simplified path chart (20), of reduced size, within which at least one, and preferably several, of the segments which connect the successive selected points in pairs have a length strictly greater than the chosen unit resolution pitch (P_unit).

2. Method according to Claim 1, **characterized in that** during the simplification step (d), a selection criterion is applied, based on flanking, according to which the first functional remarkable point (PF1) is selected, this being considered the start point (Pstart) of the laying path, the last functional remarkable point (PFm) is selected, this being considered the arrival point (Pend) of the laying path and, for at least one, and preferably for each, geometric or functional remarkable point (PPi, PFj) which is strictly between the start point (Pstart) and the arrival point (Pend), out of the two potential guide points (PGk) which flank said geometric or functional remarkable point (PPi, PFj), that is to say out of the potential guide point which immediately precedes and the potential guide point which immediately follows said geometric or functional remarkable point (PPi, PFj), at least one of said two potential guide points (PGk) is selected, for example the one out of said two guide points (PGk) which is closest to the geometric or functional remarkable point (PPi, PFj) in question.

3. Method according to Claim 2, **characterized in that**, for the at least one or respectively for each geometric or functional remarkable point (PPi, PFj) which is strictly between the start point (Pstart) and the arrival point (Pend), each of the two potential guide points (PGk) which flank, that is to say which in the case of one of them immediately precedes and for the other immediately follows said geometric or functional remarkable point (PPi, PFj), is selected.

4. Method according to Claim 2 or Claim 3, **characterized in that** after having selected, in accordance with the flanking selection criterion, the potential guide point or points (PGk) flanking a geometric or functional remarkable point (PPi, PFj) strictly between the start point (Pstart) and the arrival point (Pend), the geometric and functional remarkable point (PPi, PFj) in question is deleted.

5. Method according to one of the preceding claims, **characterized in that**, during the simplification step (d), a selection criterion based on an authorized deviation limit is applied, according to which account is taken, for each pair of adjacent line segments defined by each trio of successive points already selected, of the interpolation circle (Ck) which passes through the three points of said trio and, for each of the two line segments (21) delimited by two successive points of said trio of points, the deflection (D) is calculated between said line segment (21), forming an arc chord, and the arc (22) of the interpolation circle which corresponds to it and, if said deflection (D) calculated for said segment (21) exceeds a predefined maximum authorized deviation value (Dmax), the intermediate potential guide point or one of the intermediate potential guide points (PGk) located between the potential guide points forming the ends of the segment (21) in question, preferably the potential guide point (PGk) located closest to the middle of the line segment (21) in question, is added to the list of selected points.

6. Method according to one of the preceding claims, **characterized in that**, during the simplification step (d), a selection criterion based on a maximum authorized segment length is applied, according to which the length (L21) of each line segment (21) having two successive points already selected as its ends is calculated and, if said calculated length (L21) exceeds a predefined maximum authorized length value (Lmax), one of the potential guide points (PGk) located strictly between the two points forming the ends of the segment (21) in question, preferably either the potential guide point (PGk) which forms with the potential guide point forming the start end of the segment in question the largest segment having a length less than or equal to the maximum authorized length value (Lmax), or the potential guide point (PGk) located closest to the middle of the line segment (21) in question, is added to the list of selected points.

7. Method according to one of the preceding claims, **characterized in that**, during the simplification step (d), a selection criterion based on level of quality is applied, according to which the N potential guide points (PGk) which immediately precede and the N potential guide points (PGk) which immediately follow each of said points already selected are added to the points already selected, N being an integer, preferably zero by default, the value of which is set by the user, wherein said value of N may preferably be adjusted empirically, and more particularly increased, for example brought to the value 1 or 2, preferably on the basis of a test in which a tyre is manufactured using the simplified path chart obtained following the application of the preceding criterion or criteria, the quality of the tyre obtained is assessed and, if said quality is deemed insufficient, the value N is incremented by one unit.

8. Method according to one of the preceding claims, **characterized in that** the value of the unit resolution pitch (P _unit) which separates, in pairs, the potential guide points (PG1, PG2..., PGk..., PGp-1, PGp) created during the meshing step (c) is between 0.1 mm and 1 mm, for example equal to 0.5 mm.

9. Method according to one of the preceding claims, **characterized in that** during the step (b) of functional characterization of the profile, a laying law is associated with each of the functional zones, which laying law characterizes the conditions for laying the tyre component (2) in the functional zone in question by specifying the value, applicable and constant in the zone in question, of at least one laying parameter, and preferably of several laying parameters, from among: (i) the nature of the tyre component, (ii) the laying pitch according to which the laying head (1) is offset with respect to the core (4) along the central axis (X4) between two successive turns, (iii) the laying speed, which corresponds to the circumferential speed of the core (4) at which the tyre component (2) is wound on said core, and/or (iv) the laying tension, which corresponds to the longitudinal tensile force exerted within the tyre component (2) during laying, under the traction effect of the core (4) in rotation.

10. Method for manufacturing a tyre during which a simplified path chart (20) is established in accordance with the method for controlling a laying head according to any one of Claims 1 to 9, and the simplified path chart (20) is transmitted to a robotic arm (5) carrying the laying head (1), such that said robotic arm (5) executes said simplified path chart (20) using as setpoint the succession of segments which connect the successive selected points stored in said simplified path chart.

11. Method for manufacturing a tyre according to Claim 10, **characterized in that** the simplified path chart (20) associates each of its selected points with an absolute angle of rotation of the core, **in that** during the rotation of the core (4) about its central axis (X4), the absolute angle of rotation travelled in rotation by said core from a predefined origin is measured, and **in that** the position given by the robotic arm (5) to the laying head (1) is slaved to the angle of rotation of the core.

12. Method for manufacturing a tyre according to Claim 10 or 11, **characterized in that** it comprises a calibration step during which, using a laser tacheometer mounted on a station which is located at a chosen reference location, and which is separate from the frame (7) referred to as the "core frame" (7) which carries the core (4) and the device for rotating said core, and separate from the base (6) of the robotic arm (5), the position of three target points on the core frame is measured in order to identify a first Cartesian frame of reference (X4, Y4, Z4), referred to as the "core frame of reference", attached to the core frame (7), with respect to the location of the laser tacheometer station, and then a target, such as a corner cube, is fixed at the location of the robotic arm (5) intended to receive the laying head (1), the robotic arm (5) is moved in such a way as to successively position said target at three different points in space, and the position of said target is measured each time so as to identify, with respect to the same location of the laser tacheometer station, a second Cartesian frame of reference (X5, Y5, Z5), referred to as the "robot frame of reference", attached to the robotic arm (5), and the robotic arm (5) is calibrated in such a way as to superimpose the robot frame of reference (X5, Y5, Z5) with the core frame of reference (X4, Y4, Z4), and thus make the orthonormal axes of said frames of reference coincide.
